# EUROPEAN PATENT APPLICATION

(11) **EP 4 329 155 A1**
(43) Date of publication of application: **28.02.2024**
(21) Application number: 22791441.3
(22) Date of filing: 18.03.2022
(51) Int. Cl.: H02K 3/52

(54) **MOTOR**

(30) Priority: 21.04.2021 JP 2021071928
(71) Applicant: Minebea Mitsumi Inc., Kitasaku-gun, Nagano 3890293 (JP)
(72) Inventor: KAMOGI, Yutaka, Kitasaku-gun, Nagano 389-0293 (JP); KOUYAMA, Yutaka, Kitasaku-gun, Nagano 389-0293 (JP)
(74) Representative: Zabel, Julia Elisabeth
(86) International application number: PCT/JP2022/012776
(87) International publication number: WO 2022/224662

(57) **Abstract**

A motor (1) comprises: a stator (2) including a plurality of coils (71-76); a crossover wire (TR) for connecting the plurality of coils (71-76); and a plurality of flat plate-like terminals (T) provided to the stator (2). The crossover wire (TR) comprises: a coating film (CT0); and a conductor wire (CP) which is coated with the coating film (CT0) and is in contact with the flat plate-like terminals (T). The plurality of flat plate-like terminals (T) extend in a rotational-axis direction. The motor (1) includes a guide part (59) which guides the crossover wire (TR), in the circumferential direction, between the plurality of flat plate-like terminals (T).

## Description

### Technical Field

The present invention relates to a motor.

### Background Art

Since torque properties of a motor are determined by the number of flux linkages and winding resistance, winding a large number of low-resistance windings is one means of achieving a high-torque, low-loss motor.

In order to achieve such a motor, a method is known for reducing winding resistance without causing a reduction in space factor and productivity due to using windings with a large cross-sectional area, by using a structure with the windings connected in parallel.

However, the number of connection portions increases due to the parallel connection. In this case, a fusing technique is known of exposing a conductor of an insulating electrical wire and enabling electrical conduction with a terminal, by distributing current to the insulating electrical wire and the terminal and generating heat, when the insulating electrical wire covered with an insulating member such as a heat-resistant resin is connected to a rotary electrical machine such as a motor. The reduction in productivity can be suppressed by using the fusing technique.

### Citation List

### Patent Literature

PTL 1: JP 2014-158354

### Summary of Invention

### Technical Problem

In the fusing, deformation and damage to the motor may occur due to the heat occurring due to large current flowing through the terminal being transferred to an insulator or the like. Further, processing requires time since it is necessary to cool the heated member.

In one aspect, an object is to provide a motor capable of improving productivity.

### Solution to Problem

In one aspect, a motor includes a stator including a coil, a jumper wire connecting a plurality of the coils, and a plurality of plate-shaped terminals provided in the stator. The jumper wire includes a cover film, and a conducting wire covered with the cover film and making contact with the plate-shaped terminal. The plurality of plate-shaped terminals extend in a rotation axis direction. The motor includes a guide part guiding the jumper wire provided between the plurality of plate-shaped terminals in a circumferential direction.

According to the one aspect, productivity can be improved.

### Brief Description of Drawings

FIG. 1 is a perspective view illustrating an example of a stator with a busbar part being connected to the stator in an embodiment.
FIG. 2 is an exploded perspective view illustrating the example of the busbar part and the stator in the embodiment.
FIG. 3 is a perspective view illustrating an example of a winding terminal in the embodiment.
FIG. 4 is a perspective view illustrating an example of an insulator with an insulating electrical wire wound around the insulator in the embodiment.
FIG. 5 is a side view illustrating an example of an attaching step of the insulating electrical wire to the winding terminal in the embodiment.
FIG. 6 is a side view illustrating an example of an attaching step of the insulating electrical wire to the winding terminal in the embodiment.
FIG. 7 is a side view illustrating an example of an attaching step of the insulating electrical wire to the winding terminal in the embodiment.
FIG. 8 is a side view illustrating an example of the insulating electrical wire attached to the winding terminal in the embodiment.
FIG. 9 is a perspective view illustrating an example of a connection terminal with the insulating electrical wire being attached to the connection terminal in the embodiment.
FIG. 10 is a top view illustrating an example of an attaching step of the insulating electrical wire to the winding terminal in the embodiment.
FIG. 11 is a side view illustrating an example of a busbar in the embodiment.
FIG. 12 is an exploded perspective view illustrating an example of attaching a terminal to the busbar in the embodiment.
FIG. 13 is a top view illustrating an example of a busbar part in the embodiment.
FIG. 14 is a top view illustrating an example of a busbar in the embodiment.
FIG. 15 is a side view illustrating an example of an upper side insulator in a first modification.
FIG. 16 is a top view illustrating an example of winding the insulating electrical wire to the upper side insulator in the first modification.
FIG. 17 is a side view illustrating an example of winding the insulating electrical wire to the upper side insulator in the first modification.
FIG. 18 is a top view illustrating an example of a stator with a busbar being connected to the stator in a second modification.
FIG. 19 is a perspective view illustrating an example of the busbar in the second modification.
FIG. 20 is an exploded perspective view illustrating an example of the busbar in the second modification.
FIG. 21 is a top view illustrating an example of winding the insulating electrical wire to the upper side insulator in the second modification.
FIG. 22 is a perspective view illustrating an example of a stator in a third modification.
FIG. 23 is an exploded perspective view illustrating an example of the stator in the third modification.

### Description of Embodiments

An embodiment of a motor disclosed in the present application will be described below in detail with reference to the drawings. Note that dimensional relationships between elements and ratios of elements in the drawings may differ from actual configurations. The drawings may each include parts having mutually different dimensional relationships and proportions. In each drawing, a coordinate axis including at least one of a circumferential direction, a radial direction, and a circumferential direction described later may be illustrated for the sake of clarity of description. In addition, in the coordinate axis, a clockwise direction in the circumferential direction may be set as the positive X-axis direction, an outward direction in the radial direction may be set as the positive Y-axis direction, and an upward direction in the axial direction may be set as the positive Z-axis direction.

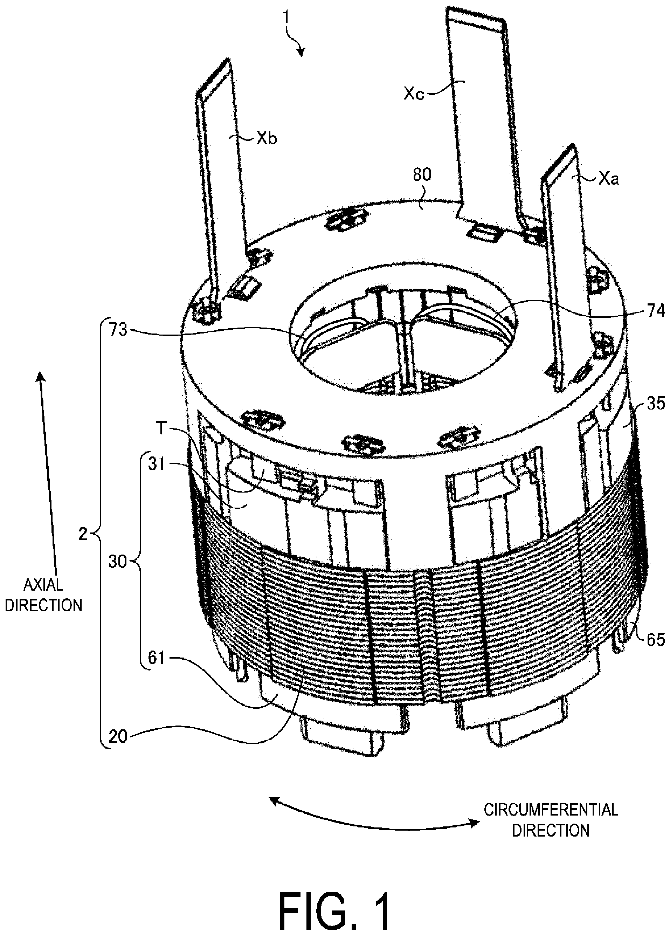

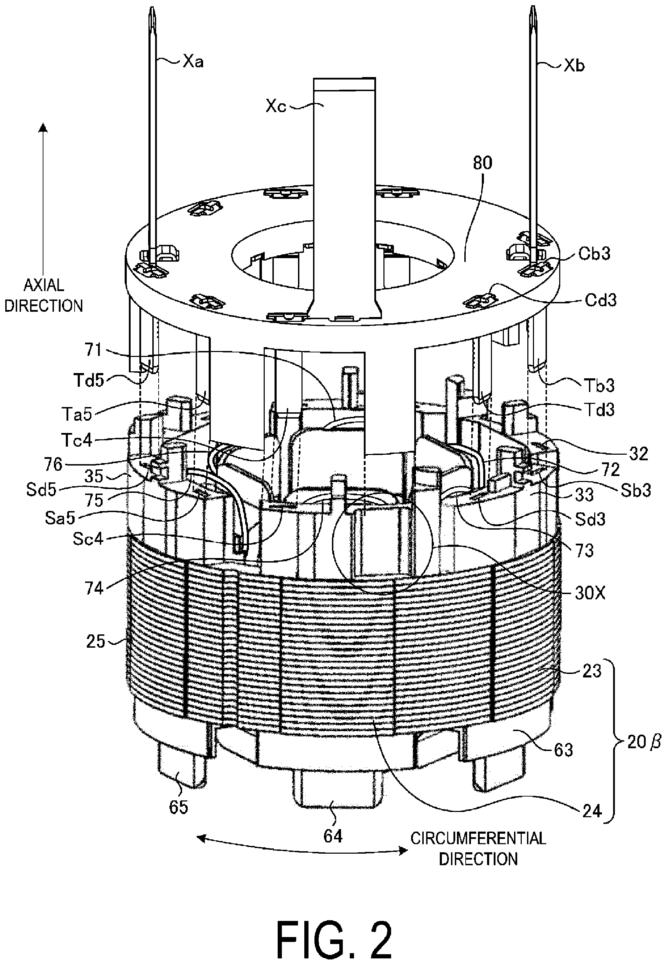

First, a motor including a stator and a busbar part in the embodiment will be described with reference to FIGS. 1 and 2. FIG. 1 is a perspective view illustrating an example of a stator with a busbar part being connected to the stator in the embodiment. FIG. 2 is an exploded perspective view illustrating the example of the busbar part and the stator in the embodiment. Note that in FIGS. 1 and 2, illustration is omitted of a jumper wire TR described later.

As illustrated in FIG. 1, a motor 1 in the embodiment includes a stator 2 and a busbar part 80. The motor 1 in the present embodiment is, for example, an inner rotor type motor. In this case, the stator 2 and the busbar part 80 are, for example, accommodated in a motor housing not illustrated in the drawing. In addition, a shaft and a rotor not illustrated in the drawing are accommodated at an inner circumference side in the radial direction of the stator 2.

The stator 2 and the busbar part 80 are coupled by a plurality of winding terminals T including winding terminals Tb3, Td3, Tc4, Ta5 and Td5 illustrated in FIG. 2. In addition, external terminals Xa, Xb and Xc are further coupled to the busbar part 80. Note that the winding terminal T is an example of a terminal on a flat plate.

As illustrated in FIGS. 1 and 2, the stator 2 includes a stator core 20, an insulator 30, and coils 71 to 76. Note that when the coils 71 to 76 are hereinafter described without distinction, the coils 71 to 76 may be simply referred to as a coil 79.

The stator core 20 in the present embodiment is composed of a plurality of arch-shaped pieces 21 to 26 described later aligned in the circumferential direction. Note that when the pieces 21 to 26 are described without distinction in the following description, they may hereinafter be referred to as a piece 29.

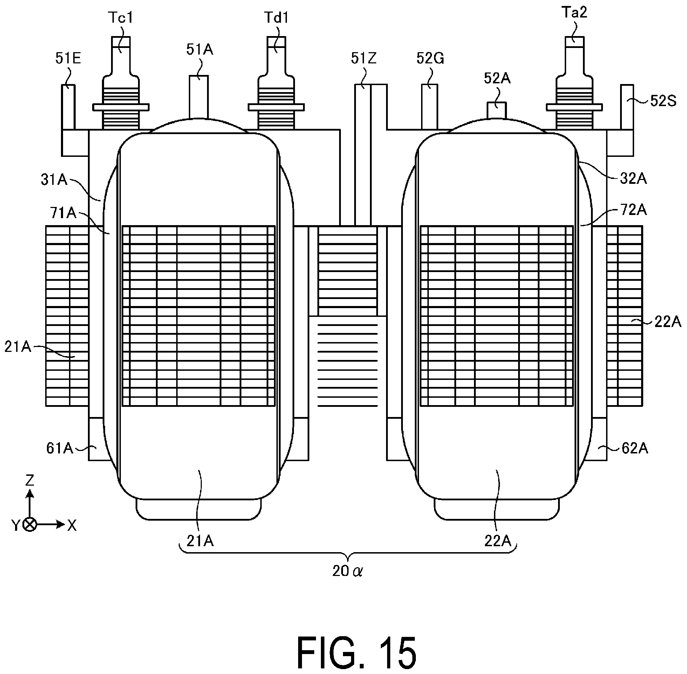

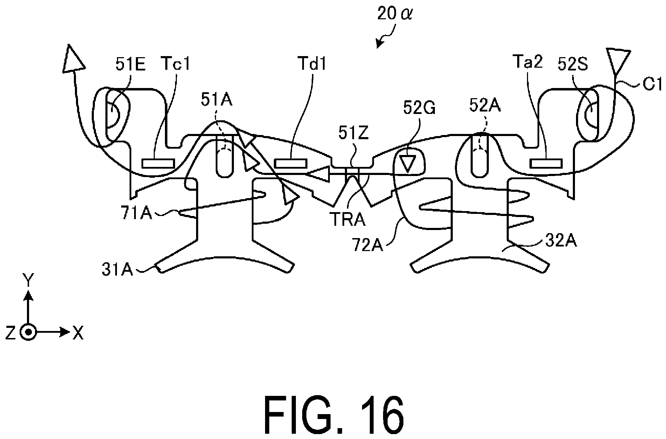

In the present embodiment, two pieces 29 adjacent to each other in the circumferential direction form a segment by being coupled through a bendable coupling part. For example, pieces 21A and 22A illustrated in the front view of FIG. 15 and the plan view of FIG. 16 construct a segment 20α. Similarly, the pieces 23 and 24 illustrated in FIG. 2 construct a segment 20β, and the pieces 25 and 26 construct a segment 20γ. In addition, the stator core 20 in the present embodiment is formed by joining the three segments 20α, 20β and 20γ in the circumferential direction.

As illustrated in FIGS. 1 and 2, the insulator 30 is formed of an insulating material such as a resin. The insulator 30 includes a plurality of upper side insulators 31 to 36, and a plurality of lower side insulators 61 to 66. Note that when the upper side insulators 31 to 36 are described without distinction, they may hereinafter simply be referred to as an upper side insulator 39.

The upper side insulators 31 to 36 are mounted to the pieces 21 to 26 from the positive direction side in the Z-axis direction. Similarly, the lower side insulators 61 to 66 are mounted to the pieces 21 to 26 from the negative direction side in the Z-axis direction. Note that as illustrated in FIG. 2, the upper side insulator 39 is, for example, provided with a recess 30X at the outside in the radial direction. The recess 30X is used for pushing the stator core 20 with a jig when pressing the core into the motor housing.

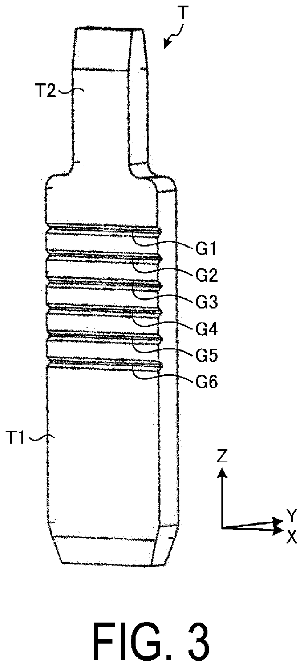

The winding terminal T is, for example, a plate-shaped terminal formed of a conducting metal such as copper. FIG. 3 is a perspective view illustrating an example of a winding terminal in the embodiment. As illustrated in FIG. 3, the winding terminal T includes a fixed portion T1, a connection part T2 extending to the upper side (the positive Z-axis direction side) in the axial direction from the fixed portion T1, and a plurality of grooves G1 to G6 formed between the fixed portion T1 and the connection part T2.

The fixed portion T1 is inserted into a winding terminal socket formed in the upper side insulators 31 to 36 of the stator 2. For example, in the winding terminal Td3 illustrated in FIG. 2, the fixed portion T1 is inserted into a winding terminal socket Sd3 formed in the upper side insulator 32.

The connection part T2 is mounted to the busbar part 80 with a winding terminal clip. For example, the winding terminal Tb3 illustrated in FIG. 2 is mounted to the busbar part 80 with a winding terminal clip Cb3. The same applies to the other winding terminals T. Note that in FIG. 2, the winding terminal T is mounted to the busbar part 80 for the sake of description of the connection structure, but in the present embodiment, the winding terminal T is mounted to the upper side insulator 39 and subsequently mounted to the busbar part 80.

The plurality of grooves G1 to G6 extend in the X-axis direction of the winding terminal T, and are depressed from the inside (the negative Y-axis direction side) toward the outside (the positive Y-axis direction side) in the radial direction. Note that the grooves G1 to G6 are an example of a plurality of recesses.

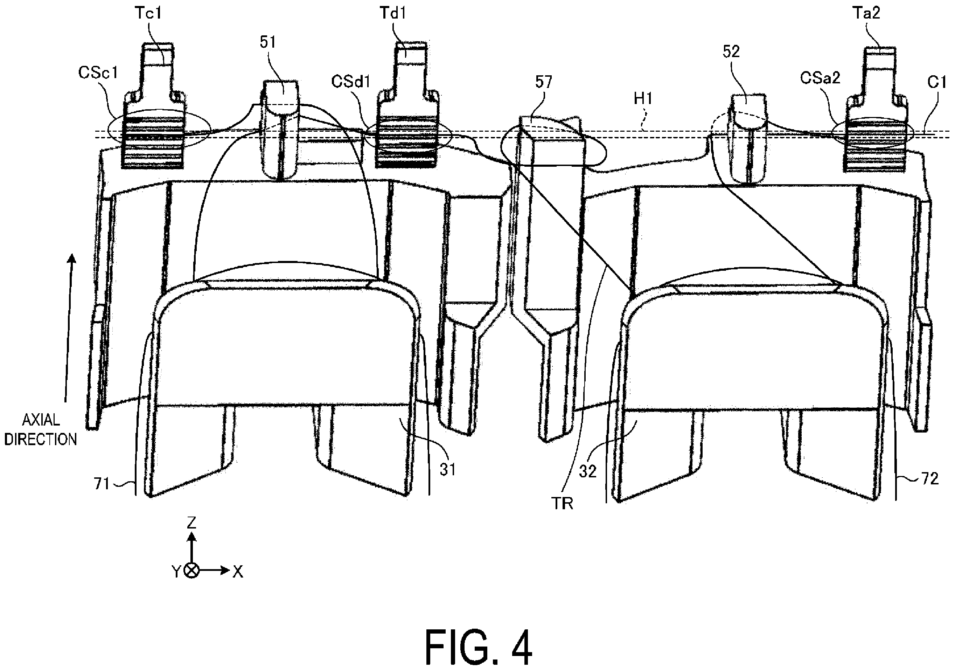

In the present embodiment, an insulating electrical wire C1 forming the coil 79 and the jumper wire TR is, for example, wound in one go around the two upper side insulators 31 and 32 constructing the segment 20α as illustrated in FIG. 4 illustrating one segment 20α. That is, the plurality of coils 79 are connected to each other through the jumper wire TR. FIG. 4 is a perspective view illustrating an example of an insulator with an insulating electrical wire wound around the insulator in the embodiment. Note that in FIG. 4, illustration is omitted of the pieces 21 and 22 where the upper side insulators 31 and 32 are mounted, and lower side insulators 61 and 62 mounted to the pieces 21 and 22.

As illustrated in FIG. 4, the coil 71 is formed with the insulating electrical wire C1 wound around the piece 21 through the upper side insulator 31 and the lower side insulator 61. Similarly, the coil 72 is formed with the insulating electrical wire C1 wound around the piece 22 through the upper side insulator 32 and the lower side insulator 62.

In the present embodiment, two coils adjacent to each other in the circumferential direction are wound in directions opposite to each other. For example, when the coil 71 is wound clockwise (CW), the coil 72 adjacent to the coil 71 in the circumferential direction is wound counterclockwise (CCW).

In the present embodiment, the jumper wire TR drawn from the coil 79 to the upper side (the positive Z-axis direction side) in the axial direction is wound around the winding terminal T mounted to the upper side insulator 39. At this time, the jumper wire TR is wound around the guide part provided in the upper side insulator 39.

As illustrated in FIG. 4, a guide part 51 is provided in the vicinity of a center portion of the upper side insulator 31 in the X-axis direction, and a guide part 52 is provided in the vicinity of a center portion of the upper side insulator 32 in the X-axis direction. The guide part 51 is, for example, disposed between two winding terminals Tc1 and Td1 in the X-axis direction. In addition, the upper side insulator 32 is further provided with a guide part 57 at a position adjacent to the upper side insulator 31 in the circumferential direction. Note that when a plurality of guide parts including the guide parts 51, 52 and 57 are described without distinction, they may hereinafter simply be referred to as a guide part 59.

For example, the jumper wire TR drawn from the coil 71 is drawn to make contact with the guide part 51 before making contact with the winding terminal Td1. Similarly, the jumper wire TR drawn from the coil 72 is drawn to make contact with the guide part 52 before making contact with a winding terminal Ta2. In addition, the jumper wire TR drawn to the coil 72 from the winding terminal Td1 is wound around the guide part 57.

As illustrated in FIG. 4, the jumper wire TR makes contact with the winding terminal Tc1 at a contact part CSc1. Likewise, the jumper wire TR makes contact with the winding terminal Td1 at a contact part CSd1, and makes contact with the winding terminal Ta2 at a contact part CSa2. When a plurality of contact parts including the contact parts CSc1, CSd1 and CSa2 are described without distinction, the plurality of contact parts may hereinafter be referred to as contact parts CS.

As illustrated in FIG. 4, the plurality of contact parts CS are provided along a line H1 parallel to an extending direction of the jumper wire TR. That is, the plurality of contact parts CS are provided at substantially the same height in the Z-axis direction. In addition, the contact part CS is provided between adjacent grooves among the plurality of grooves G1 to G6 of the winding terminal T. The contact part CS in the present embodiment is, for example, provided between the grooves G2 and G3 of the winding terminal T illustrated in FIG. 3 in the axial direction (Z-axis direction).

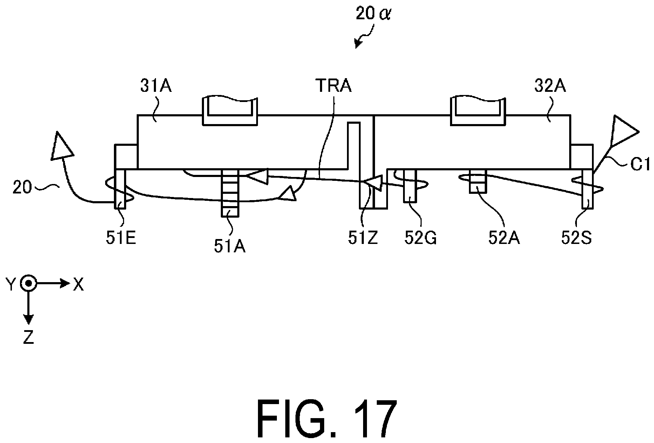

As illustrated in FIG. 17, a groove is provided at the radial outside of guide parts 51A and 52A, and the contact part CS is set to the height of the parallel line H1 in the Z-axis direction. In addition, the guide part 57 is set at a position where no excessive slack or pull is generated in the jumper wire TR when two pieces 29 adjacent to each other are bent at the bendable coupling part.

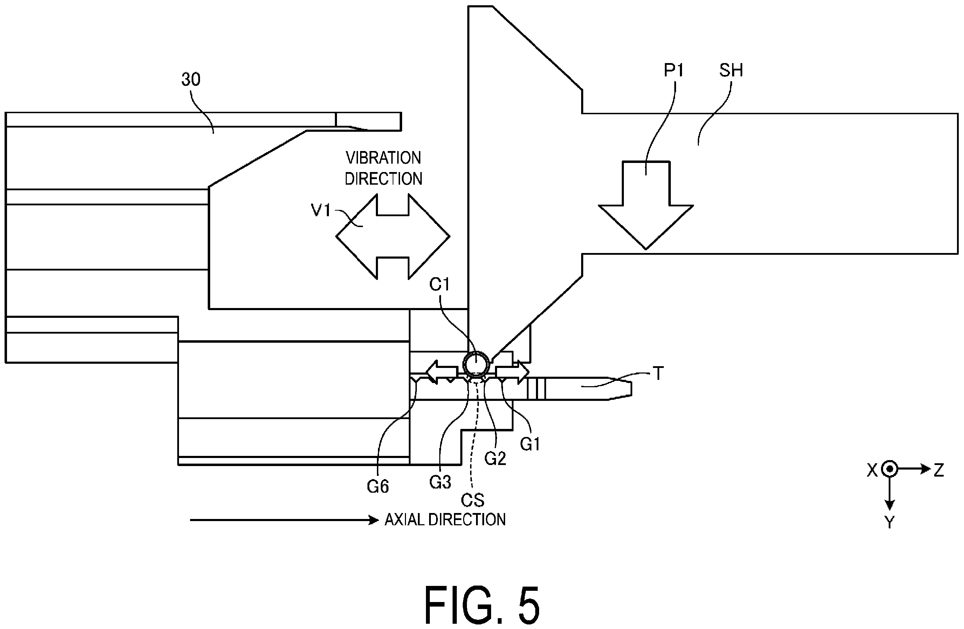

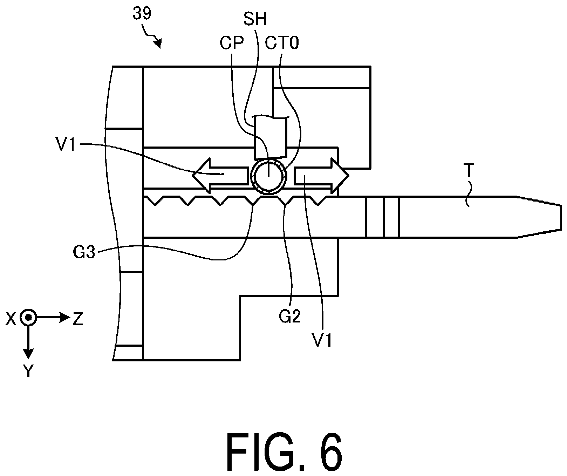

In the present embodiment, the jumper wire TR is, for example, attached to the winding terminal T through ultrasound welding. FIG. 5 is a side view illustrating an example of an attaching step of the insulating electrical wire to the winding terminal in the embodiment. FIG. 6 is a side view illustrating an example of an attaching step of the insulating electrical wire to the winding terminal in the embodiment. As illustrated in FIG. 6, the insulating electrical wire C1 in the present embodiment includes an insulating cover CTO formed of an insulator and a conducting wire CP formed of a conductor. Note that the insulating cover CTO is an example of a cover film.

In ultrasound welding of the insulating electrical wire C1 to the winding terminal T, first, as illustrated in FIG. 5, the segment 20α where the insulating electrical wire C1 is disposed at the contact part CS of the winding terminal T mounted to the upper side insulator 39 is placed in a holding jig not illustrated in the drawing. Next, an ultrasound horn SH is pressed in an arrow P1 direction in FIG. 5, i.e., to the outside in the radial direction (the positive Y-axis direction side). Then, the pressed insulating electrical wire C1 is vibrated in a direction indicated by an arrow V1, i.e., the axial direction (Z-axis direction), in FIGS. 5 and 6.

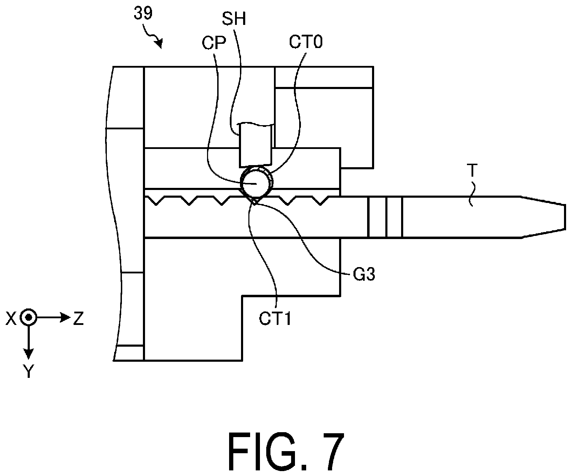

When pressed and vibrated during the ultrasound welding, the cover film CTO illustrated in FIG. 6 is, for example, torn by being pressed into the grooves G2 and G3 adjacent to the contact part CS as illustrated in FIG. 7. In this manner, the cover film CTO is peeled from the conducting wire CP. FIG. 7 is a side view illustrating an example of an attaching step of the insulating electrical wire to the winding terminal in the embodiment. As illustrated in FIG. 7, a portion CT1 of the peeled cover film CTO moves to the groove G3.

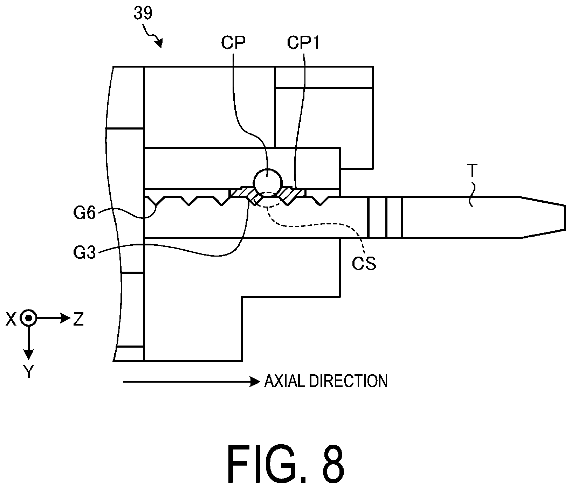

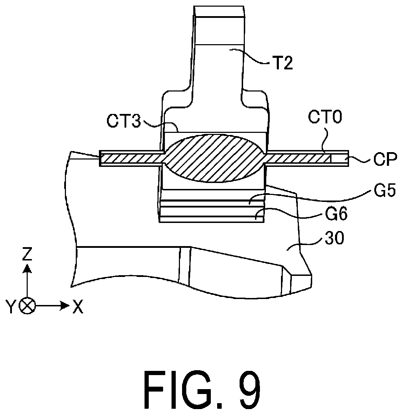

When the insulating electrical wire C1 is further pressed and vibrated, the conducting wire CP is exposed and brought into contact with the winding terminal T as illustrated in FIG. 8. FIG. 8 is a side view illustrating an example of the insulating electrical wire attached to the winding terminal in the embodiment. FIG. 9 is a perspective view illustrating an example of a connection terminal with the insulating electrical wire being attached to the connection terminal in the embodiment. As illustrated in FIGS. 8 and 9, a portion CP1 of the conducting wire CP pressed and deformed by the ultrasound horn SH extends to both sides in the axial direction (Z-axis direction) from the contact part CS. In addition, when the conducting wire CP makes contact with the contact part CS, the winding terminal T and the conducting wire CP are electrically connected to each other.

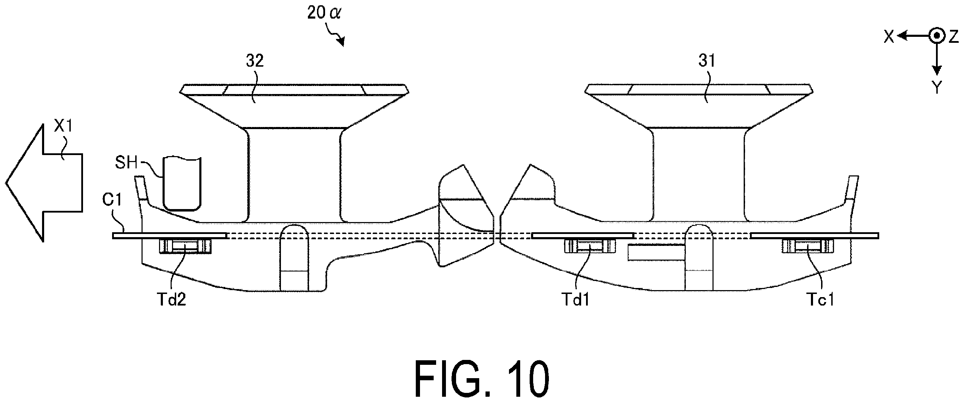

In the present embodiment, for example, since the ultrasound horn SH operates only in the Y-axis direction (up-down direction) indicated by the arrow P1 in FIG. 5, the jig moves in the direction indicated by an arrow X1 in FIG. 10 (the X-axis forward direction) as illustrated in FIG. 10 with the upper side insulators 31 and 32 fixed to the jig not illustrated in the drawing. FIG. 10 is a top view illustrating an example of an attaching step of the insulating electrical wire to the winding terminal in the embodiment. In this manner, the insulating electrical wire C1 in contact with each contact part CS provided at substantially the same height in the Z-axis direction is sequentially joined to the winding terminals Ta2, Td1 and Tc1. In this case, during the ultrasound welding, since the time required for one joining iteration is about 0.2 seconds short, the generated heat is lower than in the fusing, and cooling does not require much time, it is possible to successively join the insulating electrical wire C1 to the winding terminal T in a short amount of time.

As described above, after the coils 71 and 72 are wound and the jumper wire TR is joined to the winding terminal T by the ultrasound welding, the jumper wire TR is cut at the negative X-axis direction side of the winding terminal Tc1 and the positive X-axis direction side of Ta2 illustrated in FIG. 4. In this manner, the coil 71 and the coil 72 wound in one go are coils with Td1 connected in common, thus making parallel connection by the busbar easy. In addition, also in the coils 73 and 74 wound around the segment 20β and the coils 75 and 76 wound around the segment 20γ, the jumper wire TR is joined to each winding terminal T in the same manner.

As described above, the motor 1 in the embodiment includes the stator 2 including the coils 71 to 76, the jumper wire TR connecting the plurality of coils 71 to 76, and the plurality of plate-shaped terminals T provided in the stator 2. The jumper wire TR includes the cover film CT0, and the conducting wire CP covered with the cover film CTO and making contact with the plate-shaped terminal T. The plurality of plate-shaped terminals T extend in the rotation axis direction. Further, the motor 1 includes the guide part 59 guiding the jumper wire TR between the plurality of plate-shaped terminals T in the circumferential direction (the X-axis direction). According to such a configuration, the motor 1 can improve productivity.

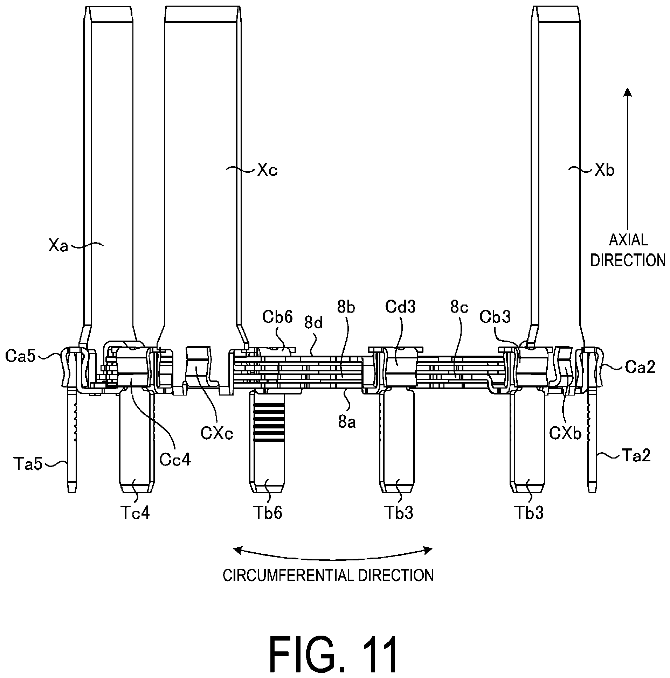

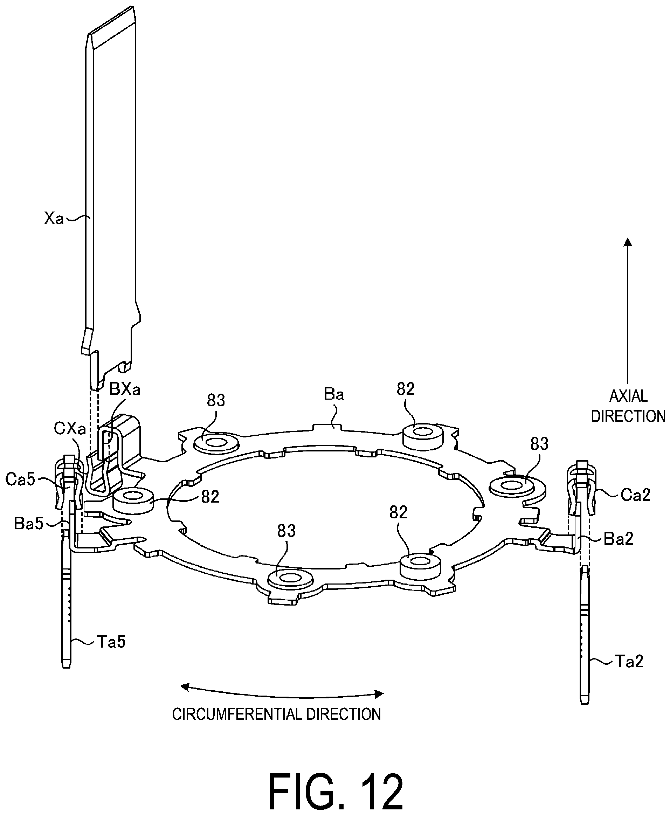

As described above, each winding terminal T electrically connected to the jumper wire TR drawn from each of the coils 71 to 76 is connected to the busbar part 80 illustrated in FIG. 2. In the present embodiment, the busbar part 80 includes four busbars Ba to Bd aligned in the axial direction (Z-axis direction) as illustrated in FIG. 11. FIG. 11 is a side view illustrating an example of a busbar in the embodiment. In the present embodiment, the busbars Ba to Bd are, for example, formed of a conducting material such as a copper alloy. As illustrated in FIGS. 11 and 12, the busbars Ba to Bd include a plurality of winding terminal joining parts and external terminal joining parts radially protruding from the main body part formed in an annular shape. FIG. 12 is an exploded perspective view illustrating an example of attaching a terminal to the busbar in the embodiment. As illustrated in FIG. 12, the winding terminal joining part including winding terminal joining parts Bc1, Bd1 and the like extends to the positive direction side (the upper side in the drawing) in the axial direction.

Each winding terminal T is disposed such that the connection part T2 makes surface contact with the winding terminal joining part in the radial direction. Then, a winding terminal clip is mounted to the winding terminal T and the winding terminal joining part in surface contact with each other from the positive direction side in the Z-axis direction. For example, the winding terminal Ta2 illustrated in FIG. 12 is fixed by a winding terminal clip Ca2 in a surface contacting state with a winding terminal joining part Ba2 of the busbar Ba in the radial direction. In this manner, each winding terminal T and each winding terminal joining part are fixed in the electrically connected state. Note that a spacer 82 and a washer 83 for ensuring the distance from another busbar may, for example, be further mounted to the busbar, as illustrated in FIG. 12.

In addition, the external terminal Xa, Xb or Xc is further connected to at least one of the busbars Ba, Bb, Bc and Bd. Each external terminal is disposed at the external terminal joining part of the busbar so as to be in surface contact with the external terminal joining part in the radial direction as illustrated in FIG. 12. Further, an external terminal clip is mounted to each external terminal and each external terminal joining part in surface contact with each other. For example, the external terminal Xa illustrated in FIG. 12 is fixed by an external terminal clip CXa in a surface contacting state with an external terminal joining part BXa of the busbar Ba in the radial direction. Similarly, the external terminals Xb and Xc are also respectively fixed to the external terminal joining parts BXb and BXc. In this manner, the external terminal and the busbar are electrically connected to each other. Note that the connection of the clip may be reinforced with solder or a conductive adhesive agent.

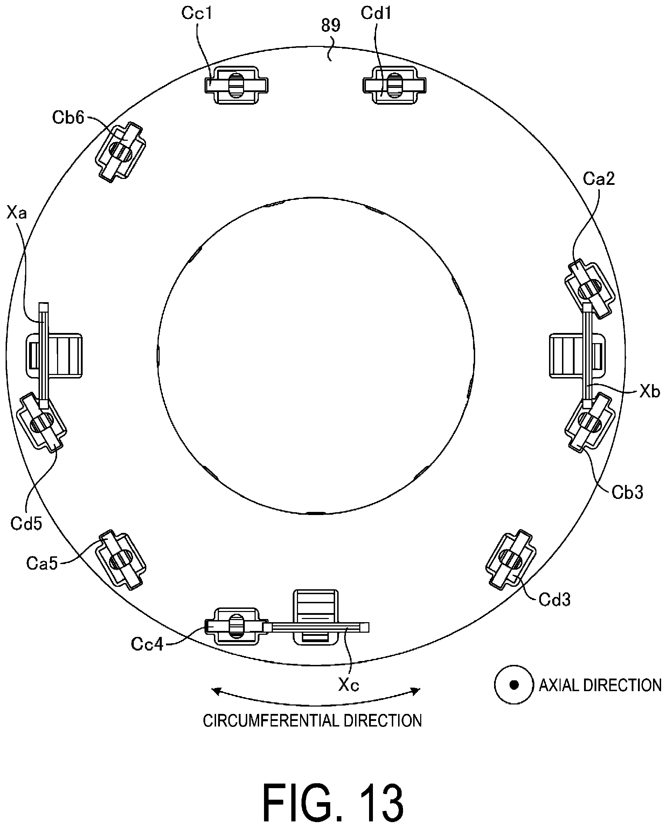

The busbar illustrated in FIG. 11 is integrated by being coupled with a cover 89 with the top surface and the side surface covered as illustrated in FIGS. 13 and 2. FIG. 13 is a top view illustrating an example of a busbar part in the embodiment. The cover 89 in the present embodiment is, for example, formed of an insulating material such as a resin. As illustrated in FIG. 13, a plurality of holes for insertion of the external terminal clip and the winding terminal clip are formed in the cover 89, for example. As illustrated in FIGS. 1 and 2, the cover 89 includes a recess or a protrusion for engagement with the upper side insulator 39.

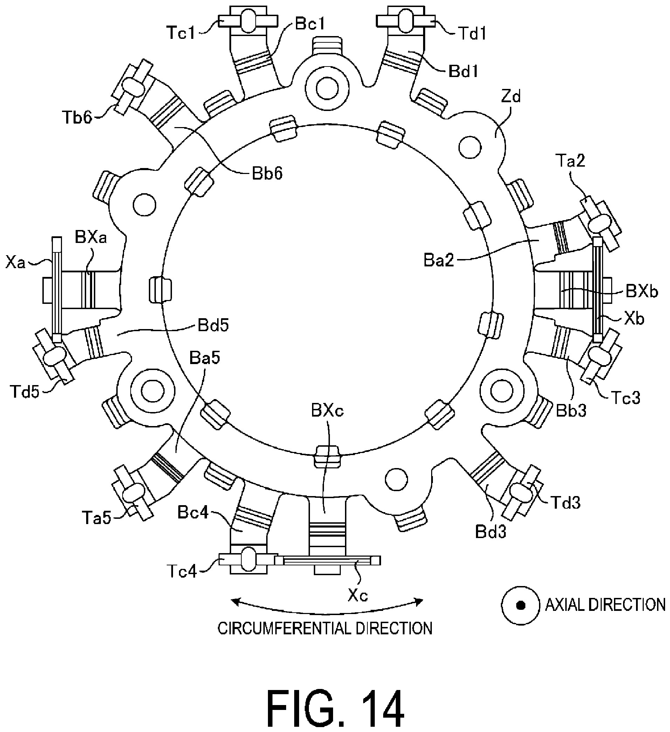

FIG. 14 is a top view illustrating an example of a busbar in the embodiment. FIG. 14 illustrates a detached state of the cover 89 illustrated in FIG. 13. As illustrated in FIG. 14, the plurality of the busbars Ba, Bb, Bc and Bd are disposed at substantially the same position in a top view.

As described above, each of the coils 71 to 76 is connected in parallel through each winding terminal T electrically connected to the busbars Ba to Bd. In this manner, the winding resistance of the motor 1 can be reduced and motor properties can be improved.

The configurations of the present embodiment are described above, but the embodiment is not limited to the above-described configurations. For example, a configuration has been described of the plurality of grooves G1 to G6 being formed in the winding terminal T, but the embodiment is not limited to this configuration, and there is a case where the insulating electrical wire C1 can be electrically connected without grooves when the winding terminal T is formed using oxygen-free copper, for example.

In addition, for example, the position of the guide part 59 provided in the insulator is merely an example, and the guide part 59 may be provided at a position other than the vicinity of the center of the upper side insulator 39 in the X-axis direction. In addition, it is possible to adopt a configuration of a plurality of the jumper wire TR being wound around one guide part 59.

### First Modification

FIG. 15 is a side view illustrating an example of an upper side insulator in a first modification. Note that in the following modifications, the same components as those illustrated in the above-described drawings are denoted with the same reference numerals, and overlapping descriptions will be omitted. In FIG. 15, upper side insulators 31A and 32A and lower side insulators 61A and 62A are mounted at the pieces 21A and 22A constructing the segment 20α, and coils 71A and 72A are further wound.

In the first modification, as illustrated in FIG. 15, at the upper side insulator 32A, the guide part 52G is further provided between a guide part 52A and a guide part 51Z in the X-axis direction in addition to the guide part 52A provided in the vicinity of the center in the X-axis direction. In addition, as illustrated in FIG. 15, the height of the guide part 51A in the axis direction (Z-axis direction) is greater than the height of the guide part 52A in the axis direction. Note that a depositing part 52S for winding the starting end of the insulating electrical wire C1 constructing the coils 71A and 72A is formed at the upper side insulator 32A, and a depositing part 51E for winding the terminal end of the insulating electrical wire C 1 is formed at the upper side insulator 31A.

FIG. 16 is a top view illustrating an example of winding the insulating electrical wire to the upper side insulator in the first modification. FIG. 17 is a side view illustrating an example of winding the insulating electrical wire to the upper side insulator in the first modification. Note that in FIG. 17, illustration of the winding terminal T is omitted. As illustrated in FIGS. 16 and 17, a jumper wire TRA drawn from the coil 72A makes contact with the guide part 51Z after being wound around the guide part 52G.

In a configuration using a split core including a plurality of pieces being coupled as in the embodiment, a force is applied to the jumper wire TRA between the pieces adjacent to each other in the circumferential direction due to the annular winding of the plurality of pieces. In this case, slack and/or disconnection of the jumper wire TRA may occur depending on the resonance frequency when the vibration of the motor is transferred to the jumper wire TRA. By providing the guide part 52G of the first modification, the length of the jumper wire TRA of the guide part 52G and the guide part 51Z provided at a bent portion is reduced, and the resonance frequency is increased. In this manner, the slack and disconnection of the jumper wire TRA are suppressed.

In addition, as illustrated in FIGS. 16 and 17, the jumper wire TRA forms the coil 71A after making contact with the guide part 51A. Then, the jumper wire TRA drawn from the coil 71A makes contact with the guide part 51A. In this manner, since the jumper wire TRA makes contact with the guide part 51A multiple times, the guide part 51A is formed with a height greater than a height of the guide part 52A.

In addition, it is possible to adopt a configuration of the insulating electrical wire C1 wound around the depositing part 51E being further wound in the opposite direction toward the depositing part 52S. In this case, for example, a plurality of the jumper wires TR with different potentials may be wound around the guide part 51A. With the insulating electrical wire C1 wound around the coils 71A and 72A back and forth in this manner, the winding resistance can be reduced and the motor properties can be improved. In this case, it is possible to adopt a configuration of the height of the guide part 51A being further increased such that the jumper wires TRA with different potentials are guided with a space between the jumper wires TRA in the axial direction (Z-axis direction).

### Second Modification

In addition, a 6-slot motor including the coils 71 to 76 has been described in the embodiment, the number of coils is not limited to this configuration. Further, a case has been described where the external terminal and the busbar are composed of different components and connected with a clip, the external terminal and the busbar may be integrally formed.

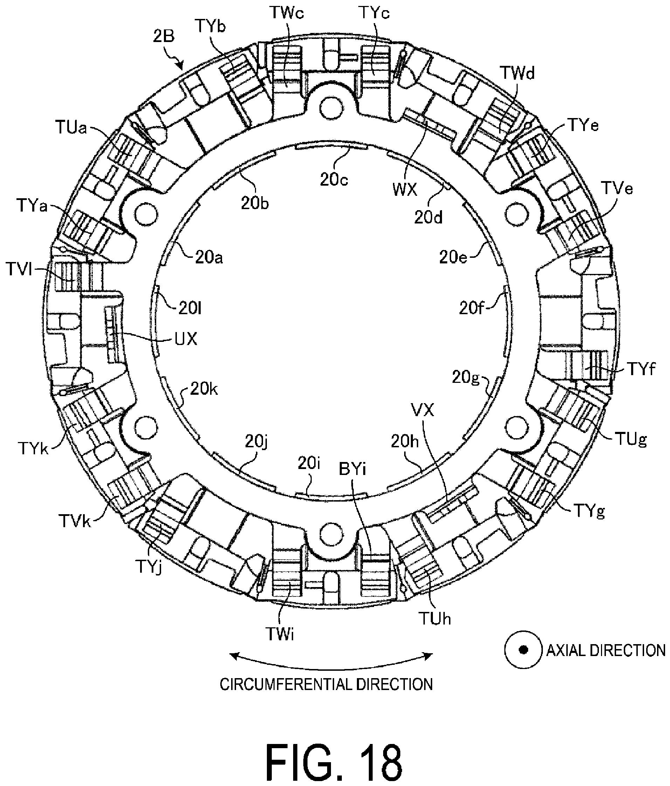

FIG. 18 is a top view illustrating an example of a stator with a busbar being connected to the stator in a second modification. Note that in FIG. 18, illustration of a cover 89B of a busbar part 80B is omitted. As illustrated in FIG. 18, a stator 2B in the second modification includes twelve pieces 20a to 20l. Note that when the plurality of pieces 20a to 20l are described without distinction, the plurality of pieces 20a to 20l may be referred to as pieces 20z.

In the second modification, upper side insulators 3Ba to 3Bl and lower side insulators 6Ba to 6Bl not illustrated in the drawing are mounted to the plurality of pieces 20a to 201. In addition, coils 7Ba to 7Bl are wound around the plurality of pieces 20a to 20l through the upper side insulators 3Ba to 3Bl and the lower side insulators 6Ba to 6BI, respectively.

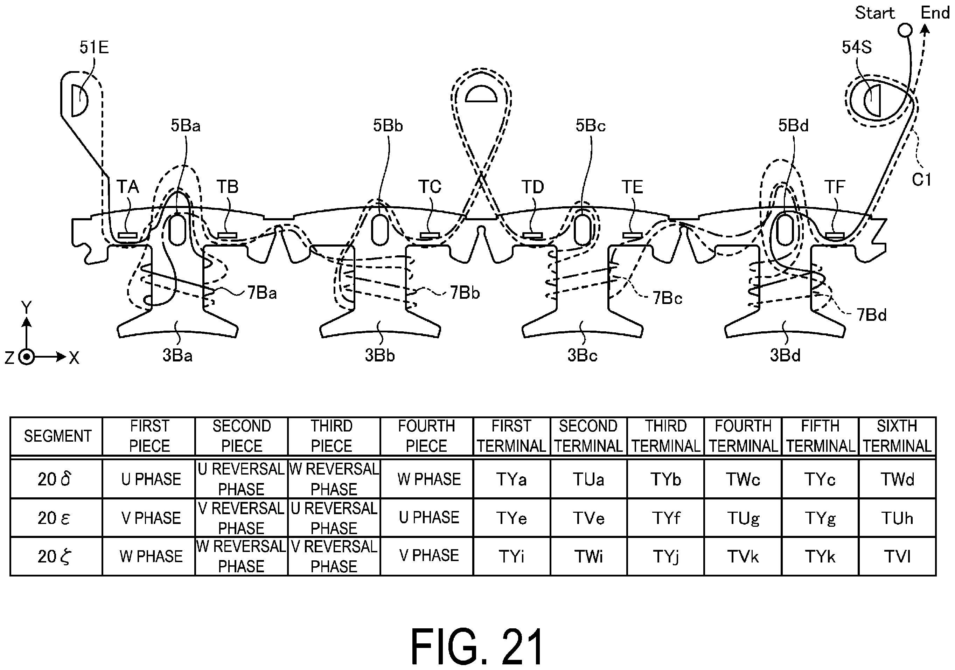

As illustrated in FIGS. 18 and 21, the winding terminals T are mounted to the upper side insulators 3Ba to 3Bl. For example, winding terminals TUa and TYa are mounted to the upper side insulator 3Ba mounted to the piece 20a.

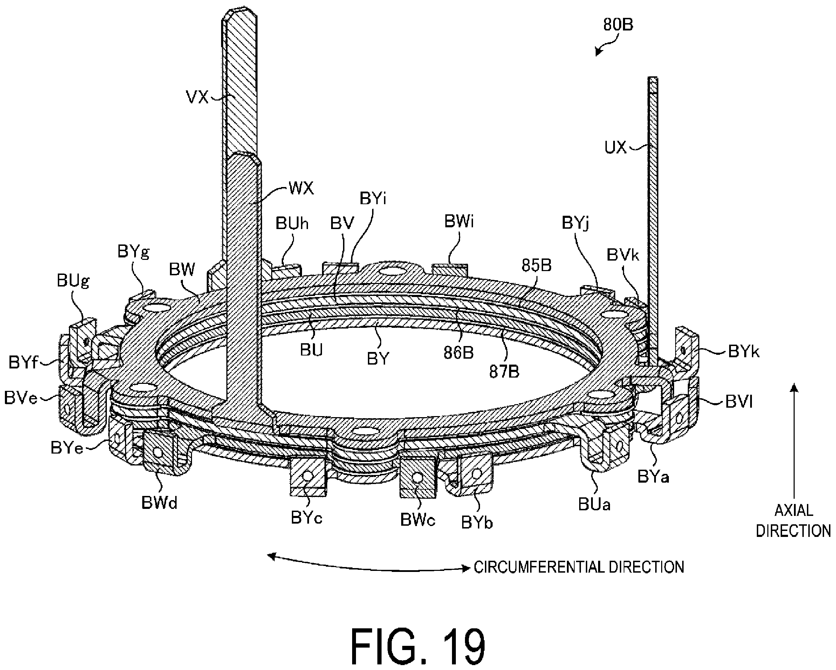

Each winding terminal T is connected by a busbar illustrated in FIG. 19. FIG. 19 is a perspective view illustrating an example of a busbar in the second modification. As illustrated in FIG. 19, the busbar part 80B in the second modification includes four busbars BW, BV, BU and BY aligned in the axial direction (Z-axis direction). The busbars face each other in a separated manner in the axial direction with insulating sheets 85B, 86B and 87B.

Each busbar includes a winding terminal joining part. For example, as illustrated in FIG. 19, the busbar BW includes winding terminal joining parts BVe, BVk and BVl. Each winding terminal joining part and winding terminal are electrically connected in a surface contacting state with solder, a conductive adhesive agent, or the like.

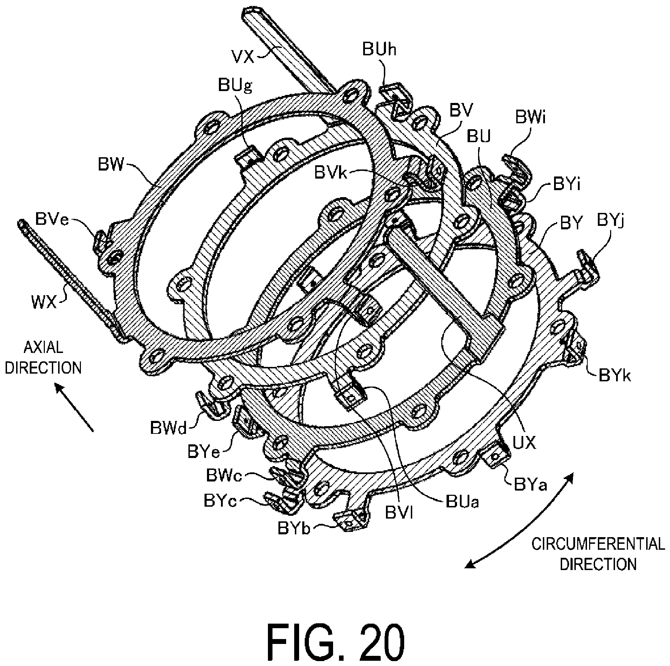

In addition, the busbar in the second modification is integrally formed with an external terminal as illustrated in FIGS. 19 and 20. FIG. 20 is an exploded perspective view illustrating an example of the busbar in the second modification. Note that in FIG. 20, illustration of the insulating sheets 85B, 86B and 87B is omitted.

As illustrated in FIG. 20, the busbars BW, BV and BU are integrally formed with external terminals WX, VX and UX. The external terminals WX, VX and UX correspond to powers of W phase, V phase and U phase, respectively. In addition, the winding terminal T being a middle point terminal is connected to a busbar BY, for example.

In the second modification, the four pieces wound around with the four coils construct segments 20δ, 20ε and 20ζ. FIG. 21 is a top view illustrating an example of winding the insulating electrical wire to the upper side insulator in the second modification. Note that in FIG. 21, illustration is omitted of the pieces mounted with the upper side insulators 3Ba to 3Bl, and the lower side insulators 6Ba to 6Bl mounted to the pieces.

As illustrated in FIG. 21, each of the segments 20δ, 20ε and 20ζ is composed of first to fourth pieces. The upper side insulators 3Ba to 3Bd are mounted to the respective pieces. Guide parts 5Ba to 5Bd are formed in the upper side insulators 3Ba to 3Bd, respectively.

In addition, one or two terminals of the winding terminals T of the first to sixth terminals are mounted to each of the upper side insulators 3Ba to 3Bd. For example, as illustrated in FIG. 21, a first terminal TA and a second terminal TB2 are mounted to the upper side insulator 3Ba. Similarly, a third terminal TC is mounted to the upper side insulator 3Bb, a fourth terminal TD and a fifth terminal TE are mounted to the upper side insulator 3Bc, and a sixth terminal TF is mounted to the upper side insulator 3Bd.

The coil wound around the first to fourth pieces corresponds to the motor winding phases illustrated in the table of FIG. 21. In addition, the winding terminal T in each segment corresponds to the winding terminal T illustrated in FIG. 18.

In the second modification, at each piece, the insulating electrical wire C1 is wound from a depositing part 54S toward the depositing part 51E, and subsequently, the insulating electrical wire C1 is further wound in an opposite direction, i.e., the direction from the depositing part 51E toward the depositing part 54S. In this case, the insulating electrical wires C1 with different potentials are wound around the guide parts 5Ba and 5Bd illustrated in FIG. 21. In such a configuration, as illustrated in FIG. 17, the guide parts 5Ba and 5Bd are formed with a height in the axial direction greater than other guide parts 5Bb and 5Bd such that the plurality of the insulating electrical wires C1 can be disposed with a space between the insulating electric wires C1 in the axial direction (Z-axis direction).

Note that two insulating electrical wires C1 wound in the positive direction and the opposite direction are simultaneously electrically connected to the segments illustrated in FIG. 21. Further, the four coils constructing the same phase of the motor are connected in parallel by the busbar, for example. In this manner, in comparison with the case of the coils being connected in series, the winding resistance can be reduced, and the motor properties can be improved.

Note that FIG. 21 illustrates a configuration of the jumper wire TRB being further wound in the opposite direction from the depositing part 51E toward the depositing part 54S, but it is possible to adopt a configuration of the insulating electrical wire C1 being wound only in one direction.

### Third Modification

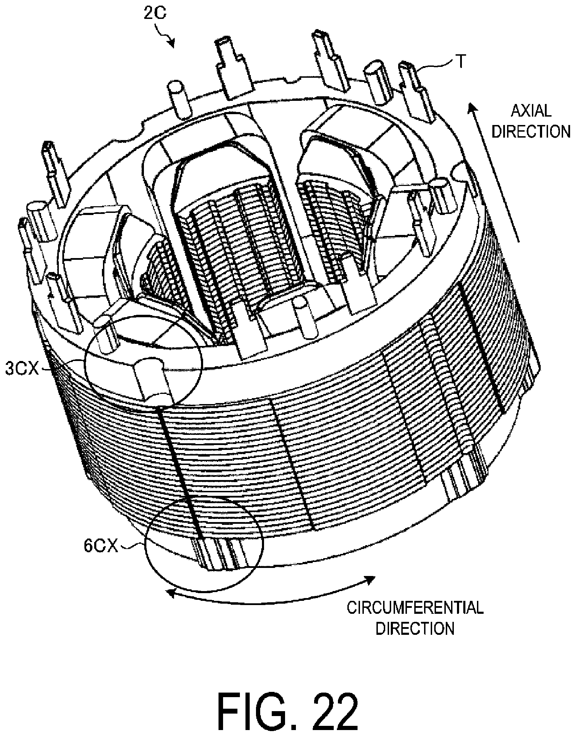

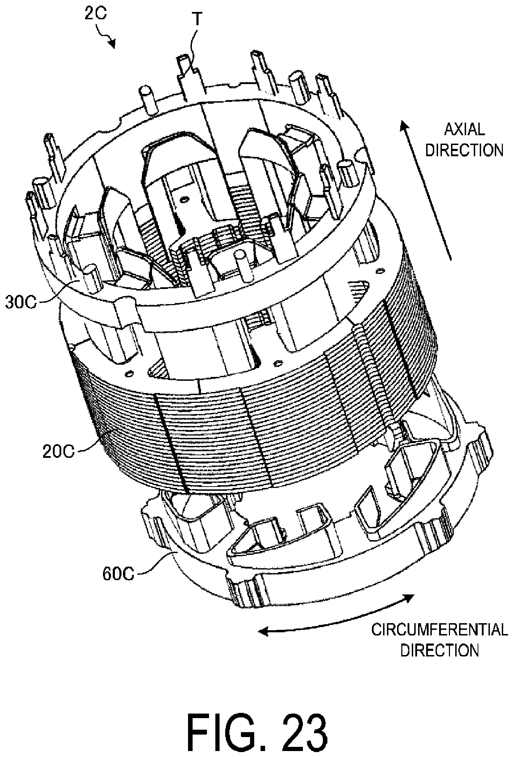

In addition, the stator core is not limited to a split core formed in a circular sector shape, but may be an integrated core formed in a substantially semicircular shape. FIG. 22 is a perspective view illustrating an example of a stator in a third modification. FIG. 23 is an exploded perspective view illustrating an example of the stator in the third modification. As illustrated in FIG. 23, a stator 2C in the third modification includes a stator core 20C, an upper side insulator 30C, and a lower side insulator 60C. In the third modification, the stator core 20C is an annular member formed by stacking electromagnetic steel sheets in the axial direction (Z-axis direction), for example. The upper side insulator 30C and the lower side insulator 60C are annularly formed to cover the stator core 20C from both sides in the axial direction.

Note that as illustrated in FIG. 22, also in the upper side insulator 30C, a recess 3CX for pushing the stator core 20 with a jig when pressing the core into a motor housing not illustrated in the drawing is formed at the outside in the radial direction. In addition, in the stator core 20C, a protrusion 6CX serving as a guide part to the motor housing is further formed.

Note that in the present embodiment, for example, the upper side insulator 30C with the winding terminal T illustrated in FIG. 23 being inserted into the upper insulator 30C is fixed to a jig not illustrated in the drawing. Then, the jumper wire TR can be sequentially joined to each winding terminal T by pressing the ultrasound horn SH to the winding terminal T while rotating the jig in the circumferential direction.

An embodiments and modifications of the present disclosure have been described, but the present invention is not limited to this embodiment and modifications and can be variously modified without departing from the gist of the present invention. Various modifications within a scope not departing from the gist are included in the technical scope of the present invention, and this is obvious to a person having skill in the art from the description of the claims.

### Reference Signs List

1 Motor, 2, 2B, 2C Stator, 20, 20C Stator core, 21 to 26, 29, 21A, 22A, 20a to 20l, 20z Piece, 20α, 20β, 20γ, 20δ, 20ε, 20ζ Segment, 30 Insulator, 31 to 36, 39, 31A, 32A, 3Ba to 3Bl, 30C Upper side insulator, 51E, 52S, 54S Depositing part, 51, 52, 57, 59, 51A, 52A, 52G, 51Z, 5Ba to 5Bd Guide part, 61 to 66, 61A, 62A, 6Ba to 6Bl, 60C Lower side insulator, 71 to 76, 79, 71A, 72A, 7Ba to 7BI Coil, 80, 80B Busbar part, 89, 89B Cover, Ba, Bb, Bc, Bd, BU, BV, BW, BY Busbar, 85B, 86B, 87B Insulating sheet, Ba2, Bc1, Bd1, BVe, BVk, BVl Winding terminal joining part, T, Ta2, Ta5, Tb3, Tc1, Tc4, Td1, Td3, Td5, TUa, TYa Winding terminal, T1 Fixed portion, T2 Connection part, G1 to G6 Groove, Ca2, Cb3 Winding terminal clip, CSa2, CSc1, CSd1 Contact part, BXa, BXb, BXc External terminal joining part, Xa, Xb, Xc, UX, VX, WX External terminal, CXa External terminal clip, Sd3 Winding terminal socket, C1 Insulating electrical wire, CP, CP1 Conducting wire, CTO to CT1 Insulating cover, SH Ultrasound horn

## Claims

1. A motor comprising:
a stator including a coil;
a jumper wire connecting a plurality of the coils; and
a plurality of plate-shaped terminals provided in the stator, wherein
the jumper wire includes a cover film, and a conducting wire covered with the cover film and making contact with the plate-shaped terminal,
the plurality of plate-shaped terminals extend in a rotation axis direction, and
a guide part guiding the jumper wire is provided between the plurality of plate-shaped terminals in a circumferential direction.

2. The motor according to claim 1, wherein a contact part of the jumper wire and the plurality of plate-shaped terminals is disposed along an extending direction of the jumper wire.

3. The motor according to claim 2, wherein a plurality of the contact parts are provided at the plurality of plate-shaped terminals.

4. The motor according to claim 2 or 3, wherein
a plurality of recesses are formed in the plate-shaped terminal, and
the contact part is disposed between the plurality of recesses in an axial direction.

5. The motor according to any one of claims 1 to 4, wherein the plurality of plate-shaped terminals and the guide part are lined and arranged along the extending direction of the jumper wire.

6. The motor according to any one of claims 1 to 5, wherein the conducting wire is welded to the plurality of plate-shaped terminals.

7. The motor according to any one of claims 1 to 6, wherein a plurality of the conducting wires are welded to the plurality of plate-shaped terminals.

8. The motor according to any one of claims 1 to 3, wherein
the stator is formed of a plurality of pieces aligned in the circumferential direction, and
another guide part is further formed, in the circumferential direction, between the guide part, and another piece adjacent to a piece provided with the guide part in the circumferential direction.
